# EUROPÄISCHE PATENTANMELDUNG

(11) **EP 1 731 425 A1**
(43) Veröffentlichungstag der Anmeldung: **13.12.2006**
(21) Anmeldenummer: 06011478.2
(22) Anmeldetag: 02.06.2006
(51) Int. Cl.: B65B 1/36, B65G 65/48

(54) **Verfahren und Vorrichtung zum Dosieren von Schüttgut**

(30) Priorität: 06.06.2005 DE 102005026147
(71) Anmelder: Mahrwald, Jürgen, Dr., 18273 Güstrow (DE)
(72) Erfinder: Mahrwald, Jürgen, Dr., 18273 Güstrow (DE)
(74) Vertreter: Jaap, Reinhard

(57) **Zusammenfassung**

Die Erfindung bezieht sich auf ein Verfahren zum Dosieren von Schüttgut und eine Vorrichtung zur Durchführung des Verfahrens, bei der das Schaufclrad durch Materialeinktenunungen nicht verklemmt und zu deren Betrieb keine Fretndenergie notwendig ist.
Es wird daher vorgeschlagen, dass die Buförderung der dosierten Menge des Schüttigutes auf der Kreisbahn von der Gewichtskraft der dosierten Menge und dem horizontalen Abstand der dosierten Menge vom Mittelpunkt der Kreisbahn angetrieben wird. Derartige Verfahren und Vorrichtungen zum Abfüllen von Sand in Sandsäcken werden in Katastrophengebieten, wie beispielsweise zum Hochwasserschutz oder zum Schutz humanitärer Einrichtungen verwendet.

## Beschreibung

Die Erfindung bezieht sich auf ein Verfahren zum Dosieren von Schüttgut und eine Vorrichtung zur Durchführung des Verfahrens nach den Oberbegriffen der Ansprüche 1 und 4.
Derartige Verfahren und Vorrichtungen werden beispielsweise zum Abfüllen von Sand in Sandsäcken in Katastrophengebieten, insbesondere zum Hochwasserschutz, oder zum Schutz humanitärer Einrichtungen verwendet.

Dabei werden, wie z. B. beim Hochwasserschutz, besondere Anforderungen an das Befüllen von Sandsäcken gestellt. Da die Sandsäcke am Einsatzort mit den Händen verteilt und aufgeschichtet werden müssen, sollte die maximale Masse eines Sandsacks ca. 20 kg nicht überschreiten. Ein in üblicher Weise beim Hochwasserschutz eingesetzter Sandsack besitzt, flach auf dem Boden liegend, die Abmaße von ca. 40 x 60 cm und ein maximales Volumen von ca. 40 l. Dieser Sandsack wird aber nur mit ca. 13 l trocknem Sand gefüllt, damit der Sandsack ordentlich verschließbar und gut transportierbar ist. Allerdings ist die Menge des abgefüllten Sandes stark vom Feuchtigkeitsgehalt des Sandes abhängig, so dass beim Abfüllen von Sandsäcken ein besonderes Augenmerk auf die Masse der gefüllten Sandsäcke gelegt werden muss, so dass kein Sandsack zu schwer ist und jeder Sandsack etwa 20 kg wiegt.

Es ist allgemeine Praxis, eine Sandsackbefüllung per Hand unter Zuhilfenahme eines Trichters vorzunehmen, wobei durch eine Hilfsperson mit einer Schaufel Sand durch den Trichter in den darunter angeordneten Sandsack eingefüllt wird. Dabei kann an dem Trichter, wie in der DE 203 06 018 U1 vorgestellt, eine Sandsackhalterung angeordnet sein. Auch ist z. B. aus der DE 203 00 721 U1 eine Sandsackschaufel bekannt, die die Aufgaben der Schaufel und des Trichters miteinander vereint.
Nachteilig an der Sandsackbefüllung per Hand ist aber, dass das Einfüllen des Sandes in den Trichter durch menschliche Kraft erfolgt. Damit ist diese Art der Sandsackbefüllung eine körperlich sehr anstrengende sowie eine sehr zeit- und personalintensive Arbeit. Außerdem ist diese Methode der Sandsackbefüllung per Hand zu ungenau, da die der Befüllung entsprechende Masse des Sandsackes geschätzt wird. Wenn der Trichter zu voll gefüllt wurde, überschreitet der Sand im Trichter das Fassungsvermögen des Sandsackes und es rieselt Sand neben den Sandsack. Zudem ist der Sandsack dann auch zu schwer und es muss erst umständlich der zu viele Sand aus dem Sandsack entfernt werden, damit der Sandsack überhaupt zugebunden werden kann.

Auch sind manuell angetriebene Sandsackbefüllgeräte bekannt, wie z. B. aus der Patentschrift DE 196 44 038 A1. Dieses Sandsackfüllgerät besteht aus einem oberen Vorratsbehälter für den Sand, einem unter dem Vorratsbehälter angeordneten Flachdrehschieber zur Bemessung der Sandmenge und aus einem unteren Einfülltrichter. Unterhalb des Einfülltrichters befindet sich eine höhenverstellbare Sackauflage. Zum Befüllen des Sackes mit Sand wird mit einer Hand der Sack um den Einfülltrichter gehalten und mit der anderen Hand der Flachdrehschieber bedient.
Das hat Nachteile, da die Bedienung des Flachdrehschiebers manuell erfolgt und dadurch das Befüllen der Sandsäcke vom Augenmaß und vom Geschick des Bedieners abhängig ist. Ein gleichvolles Füllen von Sandsäcken ist damit nicht möglich. Unterschiedlich volle Sandsäcke sind aber unerwünscht. Außerdem ist eine zweite Person zum Nachfüllen des Vorratstrichters erforderlich.

Mit der Patentschrift DE 638 571 ist eine Dosiervorrichtung bekannt geworden, bei der an einem Gehäuse oberhalb ein Einfülltrichter und unterhalb ein Auslasstrichter mit einem Behälter angeordnet ist. In dem Gehäuse ist ein mehrteiliges Schaufelrad über eine Welle mit einem Motor antreibbar gelagert. Dabei sind die die Schaufeln tragenden Seitenwände mehrteilig ausgebildet sowie mit Durchbrechungen und Abschrägungen versehen. Das Schaufelrad weist mehrere Schüttgutkammern auf. Im Funktionszustand befindet sich im Einfülltrichter Schüttgut, das in die unter dem Einfülltrichter befindliche Schüttgutkammer des Schaufelrades hineinfällt und die Schüttgutkammer vollständig ausfüllt. Ist die Schüttgutkammer voll, so kann kein Schüttgut mehr nachrutschen, da die Trichteröffnung durch das Schüttgut verstopft ist. Durch die Motorkraft dreht sich das Schaufelrad, wobei dass zuviel dosierte Schüttgut an der Gehäuseinnenseite abgestrichen wird. Gleichzeitig gelangt die nächste Schüttgutkammer unter den Einfülltrichter, die sich dann auf die gleiche Weise füllt. Befindet sich eine gefüllte Schüttgutkammer über dem Auslasstrichter, dann rutscht das dosierte Schüttgut durch diesen Auslasstrichter in einen darunter stehenden Behälter.
Von entscheidendem Nachteil ist, dass zum Betrieb dieser Dosiervorrichtung elektrische Energie zum Antrieb des Schaufelradantriebsmotors notwendig ist, die aber häufig, gerade in Katastrophenfällen, nicht zur Verfügung steht.
Eine weitere Dosiervorrichtung mit dem zuvor beschriebenen Aufbau ist aus der Patentschrift DE 31 51 890 A1 bekannt, bei der aber das Schaufelrad, anstelle eines Motors, axial mit einem Handrad verbunden ist. Ein Weiterdrehen des Schaufelrades erfolgt hier manuell mit dem Handrad.
Ein wesentlicher Nachteil dieser Dosiervorrichtung ist aber, dass das Weiterdrehen des Schaufelrades eine körperlich schwere Arbeit ist.
Beide zuvor genannten Dosiervorrichtungen haben den gemeinsamen Nachteil, dass nach dem Befüllen der Kammer die zuviel dosierte Menge an der Gehäuseinnenseite abgestreift werden muss. Dabei gelangt abgestrichenes Material zwischen der Außenfläche der abgedeckten Kammern des Schaufelrades und der Gehäuseinnenseite, so dass sich das Schaufelrad festsetzen kann.
Von Nachteil ist auch, dass sich beim Drehen des gefüllten Schaufelrades die relative Lage der Kammer ändert, wodurch auch der in den Kammern befindliche Sand zwischen die Außenfläche der abgedeckten Kammern des Schaufelrades und der Gehäuseinnenseite gelangt. Auch hierdurch kann sich das Schaufelrad durch Materialeinklemmungen festsetzen.

Ein Festsetzen des Schaufelrades kann bei einem Motorantrieb zu Überlastung des Motors führen. Bei einem manuellen Antrieb reicht dann auch die Muskelkraft nicht mehr aus, um das Schaufelrad weiterzudrehen. Bei beiden Antrieben müssen dann die Kammern des Schaufelrades entleert werden, was umständlich und zeitintensiv ist.

Der Erfindung liegt daher die Aufgabe zu Grunde, ein gattungsgemäßes Verfahren und eine entsprechende Vorrichtung zum Dosieren von Schüttgut weiter zu entwickeln, bei der das Schaufelrad nicht verklemmt und zu deren Betrieb keine Fremdenergie notwendig ist.

Diese verfahrensseitige Aufgabe wird durch die Merkmale des Anspruchs 1 und die konstruktive Aufgabe durch die Merkmale des Anspruchs 4 gelöst. Zweckdienliche Ausgestaltungen ergeben sich aus den Unteransprüchen 2 und 3 sowie 5 bis 12.
Das neue Verfahren zum Dosieren von Schüttgut, insbesondere für das Abfüllen von Sand in Sandsäcke und die dazugehörige Vorrichtung beseitigen die Nachteile des Standes der Technik.
Vorteilhaft bei der Anwendung des Verfahrens ist, dass die Beförderung der dosierten Menge des Schüttgutes auf der Kreisbahn von der Gewichtskraft der dosierten Menge und dem horizontalen Abstand der dosierten Menge vom Mittelpunkt der Kreisbahn angetrieben wird, da dadurch zum Drehen der Trommel keine Fremdenergie notwendig ist.
Von Vorteil ist auch, wenn die Beförderung der dosierten Menge des Schüttgutes auf der Kreisbahn für einen Zeitraum des Dosierens und des Abgebens der dosierten Menge des Schüttgutes in den Sandsack stufenweise erfolgt, da so die Trommel zum Dosieren vollständig gefüllt und zum Umfüllen auch vollständig entleert wird.
Vorteilhaft ist auch, wenn die Unterbrechung der Beförderung der dosierten Menge des Schüttgutes auf der Kreisbahn automatisch erfolgt, so dass es zu keinen Fehlhandlungen durch das Bedienpersonal kommt.
Vorteilhaft bei der Anwendung der neuen Vorrichtung zum Dosieren von Schüttgut, insbesondere für das Abfüllen von Sand in Sandsäcke ist es, dass die Füllsegmente der Trommel jeweils mindestens ein Leitblech aufweisen, wobei jedes Leitblech in seinem Anstellwinkel und durch jeweils eine Verlängerung in seiner Gesamtfläche veränderbar ist. Durch die Einstellung des Winkels und die Veränderung der Gesamtfläche des Leitbleches mit seiner Verlängerung erfolgt eine genaue und einfache Justierung der Abfüllmenge des Schüttgutes entsprechend seiner Feuchte und dem daraus resultierenden Böschungswinkel. Jedes Leitblech ist gegenüber dem unteren Rand des Einfülltrichters so angeordnet, dass selbst bei trockenem Sand und damit flachstem Böschungswinkel kein Sand über den Rand hinaus gelangen kann.
Von Vorteil ist auch, wenn die drehbare Trommel eine Vorrichtung zur Positionierung der Füllsegmente besitzt, wobei in einem arretierten Zustand der Trommel die Position des zu befüllenden Füllsegmentes so bestimmt ist, dass die beiden Trennbleche des Füllsegmentes in unterschiedlichen Winkeln zum Lot stehen. Aus diesen unterschiedlichen Winkeln der Trennbleche zum Lot resultiert, im befüllten Zustand des Füllsegmentes, eine ungleiche Massenverteilung bezüglich der Drehachse der Trommel, die wiederum ein Drehmoment der Trommel zur Folge hat. Mit der Vorrichtung zur Positionierung der Füllsegmente wird die drehbare Trommel zum Befüllen und zum Entleeren der Füllsegmente unterhalb des oberen Einfülltrichters und oberhalb des unteren Auslasstrichters angehalten. Nach der Freigabe der drehbaren Trommel durch die Vorrichtung zur Positionierung der Füllsegmente wirkt das Drehmoment und die Trommel beginnt sich zu drehen, bis die Drehbewegung der Trommel durch die Positionierung der Füllsegmente zum Befüllen des nächsten Füllsegmentes gestoppt wird.
Dabei ist es von besonderem Vorteil, wenn während der Befüllung die Trennbleche des jeweils zu befüllenden Füllsegmentes, zwischen dem Lot und dem in Drehrichtung der Trommel liegenden Trennblech einen Winkel von 90° und dem entgegen der Drehrichtung der Trommel liegenden Trennblech einen Winkel von 0° aufweisen.

Die Erfindung soll anhand eines Ausführungsbeispieles näher erläutert werden. Dazu zeigen:
- **Fig. 1**: eine schematische Darstellung der neuen Vorrichtung zum Dosieren von Schüttgut und
- **Fig. 2**: eine schematische Schnittdarstellung eines gefüllten Füllsegmentes der neuen Vorrichtung zum Dosieren von Schüttgut.

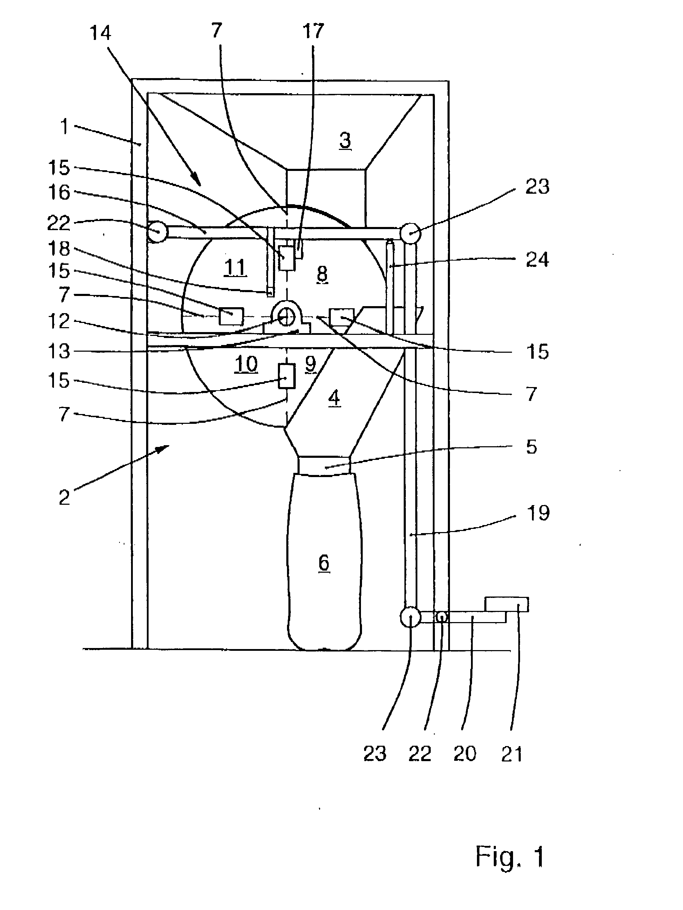

Wie die Fig. 1 zeigt, besteht die Vorrichtung aus einem Maschinengestell 1 mit einer Trommel 2, einen oberhalb der Trommel 2 angeordneten, im Öffnungsquerschnitt rechteckigen Einfülltrichter 3 und einem unterhalb der Trommel 2 angeordneten, im Öffnungsquerschnitt rechteckigen Auslasstrichter 4 mit einer Halterung 5 für einen Sandsack 6.
Die Trommel 2 ist mantelflächig offen ausgeführt und durch Trennbleche 7 in vier gleichgroße Füllsegmente 8, 9, 10, 11 unterteilt. Gegenüber dem Maschinengestell 1 ist die Trommel 2 durch eine Welle 12 und ein Lager 13 drehbar gelagert. Dabei ist die Trommel 2 durch eine automatische Arretierung 14 segmentweise fixiert.

Die Arretierung 14 ist ein nach dem Prinzip einer Unruh einer mechanischen Uhr aufgebautes Hebelsystem, bei dem anstelle eines Zahnrades mehrere Segmentanschläge 15 eingesetzt werden. Dazu ist auf den beiden Seitenflächen der Trommel 2 für jedes Füllsegment 8, 9, 10, 11 jeweils ein Segmentanschlag 15 pro Seitenfläche angeordnet. Außerdem besteht die Arretierung 14 pro Seitenfläche der Trommel 2 aus einem nahezu waagerechten Hebelarm 16 mit zwei Sperrklinken 17, 18 für die Segmentanschläge 15, einem gemeinsamen, nahezu senkrechten, Verbindungsstab 19 und einem nahezu waagerechten Fußhebel 20 mit einer Trittfläche 21.
Dabei ist der Hebelarm 16 einerseits über ein Lager 22 mit dem Maschinengestell 1 und andererseits über ein Gelenk 23 mit dem oberen Ende des Verbindungsstabs 19 verbunden, und liegt in seiner Grundstellung auf einer Auflage 24 auf.
An das untere Ende des Verbindungsstabs 19 schließt sich über ein weiteres Gelenk 23 das innere Ende des Fußhebels 20 an. An dem äußeren Ende des Fußhebels 20 befindet sich die Trittfläche 21. Bezogen auf seine Länge ist der Fußhebel 20 nahezu mittig über ein weiteres Lager 22 mit dem Maschinengestell 1 verbunden.
Die Sperrklinken 17, 18 und die Segmentanschläge 15 sind auf der Trommel 2 derart zueinander angeordnet, dass in der maximal nach unten gerichteten Schwenkstellung des Hebelarms 16, ein Segmentanschlag 15 die vordere Sperrklinke 17 und in der maximal nach oben gerichteten Schwenkstellung des Hebelarms 16, ein Segmentanschlag 15 die hintere Sperrklinke 18 berührt. Während der Bewegung zwischen der maximal nach unten gerichteten und der maximal nach oben gerichteten Schwenkstellung des Hebelarms 16 haben die Sperrklinken 17, 18 mit keinem Segmentanschlag 15 Kontakt.

Wegen dem in Bezug auf die Drehachse der Welle 12 außermittigen Arretieren der Füllsegmente 8, 9, 10, 11 der Trommel 2 ist auch der Einfülltrichter 3 oberhalb des nach oben gerichteten Füllsegmentes 8 und der Auslasstrichter 4 unterhalb des nach unten gerichteten Füllsegmentes 9 bezüglich der Welle 12 außermittig angeordnet, so dass sich der Einfülltrichter 3 direkt über dem nach oben gerichteten Füllsegment 8 befindet und der Auslasstrichter 4 direkt unterhalb des nach unten gerichteten Füllsegmentes 9 zur Umfüllung des Schüttgutes in den Sandsack 6 angeordnet ist.

Jedes Füllsegment 8, 9, 10, 11 besitzt ein Leitblech 25, das über eine lösbare Befestigung 26 mit einer Verlängerung 27 verbunden ist. Dabei dienen das Leitblech 25 und die Verlängerung 27 einerseits der Zurückhaltung eines Schüttgutes während des Befüllens der Füllsegmente 8, 9, 10, 11 und andererseits der Leitung des Schüttgutes bei Umfüllung aus den Füllsegmenten 8, 9, 10, 11 in den Auslasstrichter 4.
Jedes Leitblech 25 und die jeweils dazugehörige Verlängerung 27 ist variabel zu dem in Drehrichtung der Trommel 2 gerichteten Trennblech 7 des jeweiligen Füllsegmentes 8, 9, 10, 11 angeordnet, wobei jedes Leitblech 25 einen Drehpunkt nahe dem äußeren Umfang der Trommel 2 besitzt. Auf der äußeren Seite schließen die Leitbleche 25 mit dem äußeren Umfang der Trommel 2 ab. Über die innere Seite der Leitbleche 25 hinaus, ist die jeweilige Verlängerung 27, parallel zum Leitblech 25, verschieb - und arretierbar. Dabei richten sich die Abmaße und die Anordnung der Leitbleche 25 mit ihren Verlängerungen 27 in den Füllsegmenten 8, 9, 10, 11 nach einem Böschungswinkel des Schüttgutes.
Der Böschungswinkel ist der sich bei einer Schüttung zwischen Grund- und Rieselfläche einstellende größtmögliche Winkel, bevor das Schüttgut an der Rieselfläche abzurieseln beginnt. Der Böschungswinkel ist bei trockenem Sand mit ca. 32° am flachsten. Bei leicht feuchtem Sand ist der Böschungswinkel mit ca. 50° deutlich größer. Wenn der Sand, z. B. nach Regen bei einer freien Lagerung, durchfeuchtet ist oder frisch aus einer Sandgrube kommt, beträgt der Böschungswinkel fast 90°. Dabei ist nasser Sand schwerer als trockener Sand.
Damit die Vorrichtung für alle Feuchtigkeitsstufen geeignet ist und kein Schüttgut über den äußeren Umfang der Trommel 2 während des Befüllens der Füllsegmente 8, 9, 10, 11 rieseln kann, sind die Leitbleche 25 entsprechend dem flachsten Böschungswinkel positioniert. Wird nasser Sand dosiert, dann lässt sich durch die Verlängerung 27 eine Vergrößerung der Gesamtfläche aus Leitbleche 25 und Verlängerung 27 erreichen, so dass die dosierten Sandvolumen in den Füllsegmenten 8, 9, 10, 11 immer 20 kg betragen.

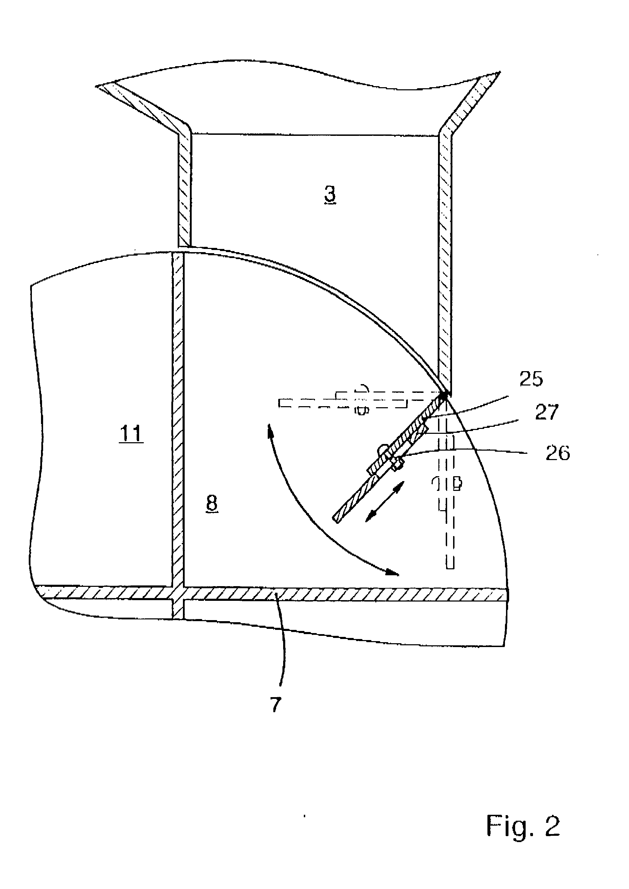

Die Funktionsweise der erfindungsgemäßen Vorrichtung wird nachfolgend beschrieben. Ausgehend von dem in Fig. 1 und Fig. 2 dargestellten arretierten Zustand, befindet sich unter dem Auslasstrichter 4 an der Halterung 5 ein zu befüllender Sandsack 6. In den Einfülltrichter 3 wird das Schüttgut eingefüllt. Dieses Schüttgut rutscht durch den Einfülltrichter 3 in das Füllsegment 8 und bildet dort einen Schüttguthaufen aus. In Umfangsrichtung der Trommel 2 ist der Schüttguthaufen durch keine feste Wand abgegrenzt, so dass sich das Schüttgut ausbreiteten kann. Dabei bildet das Schüttgut in Richtung der Mantelfläche der Trommel 2 eine Neigung aus, die vom Böschungswinkel des Schüttgutes abhängig ist. Unterbrochen wird diese geneigte Außenfläche des Schüttguthaufens durch das Leitblech 25 mit seiner Verlängerung 27. Dieses Leitblech 25 mit seiner Verlängerung 27 dient hier als Abrutschwiderstand, an dem sich das Schüttgut abstützt und eine Stufe ausbildet.
Mit dem Befüllen des Füllsegmentes 8 wächst der Schüttguthaufen so weit an, bis die Auslassöffnung des Einfülltrichters 3 gefüllt ist und kein Schüttgut aus dem Einfülltrichter 3 in das Füllsegment 8 mehr nachrutschen kann. Dabei bildet das Schüttgut in dem nach allen Seiten offenen Zwischenraum zwischen dem Einfülltrichter 3 und der Trommel 2 ebenfalls einen Böschungswinkel aus.

In diesem gefüllten Zustand des Füllsegmentes 8 resultiert aus der Gewichtskraft des Schüttgutes und der außermittigen Lage des gefüllten Füllsegmentes 8 in Bezug auf die Lagerung der Trommel 2 ein Drehmoment, wobei die Trommel 2 durch die automatische Arretierung 14 am Weiterdrehen gehindert wird.
Die Arretierung 14 wird durch das Heruntertreten des Fußhebels 20 gelöst. Dabei hebt sich die arretierende hintere Sperrklinke 18 des Hebelarms 16 so weit an, bis der Hebelarm 16 seine maximal nach oben gerichtete Schwenkstellung erreicht hat und der Segmentanschlag 15 des Füllsegmentes 8 ausgelöst wurde. Gleichzeitig wird die vordere Sperrklinke 17 des Hebelarms 15 vor dem Segmentanschlag 15 des in Drehrichtung der Trommel 2 nachfolgenden Füllsegmentes 11 geführt. Die Trommel 2 dreht sich dadurch soweit, bis der Segmentanschlag 15 des Füllsegmentes 11 an die vordere Sperrklinke 17 anschlägt.
Nach Loslassen des Fußhebels 20 senkt sich der Hebelarm 16 aufgrund seiner Gewichtskraft wieder ab, bis der Hebelarm 16 seine maximal nach unten gerichtete Schwenkstellung erreicht hat. Dabei wird nun die vordere Sperrklinke 17 den Segmentanschlag 15 des Füllsegmentes 11 ausgelöst und die hintere Sperrklinke 18 vor den Segmentanschlag 15 des Füllsegmentes 11 geführt. Gleichzeitig beginnt die Trommel 2 sich erneut zu drehen, bis dieser Segmentanschlag 15 des Füllsegmentes 11 an die hintere Sperrklinke 18 anschlägt, womit sich die Trommel 2 genau um ein Füllsegment 8, 9, 10, 11 weitergedreht hat. Dadurch befindet sich nun das nachfolgende Füllsegment 11 unterhalb des Einfülltrichters 3 und wird mit weiterem Schüttgut befüllt. Gleichzeitig gelangt das gefüllte Füllsegment 8 oberhalb des Auslasstrichters 5 in eine veränderte Lage, wobei das in Richtung Mantelfläche der Trommel 2 angeordnete Leitblech 25 und die Verlängerung 27 nun einen durchlässigen Boden für das Füllsegment 8 ausbilden. Das sich im Füllsegment 8 befindliche Schüttgut fällt durch die Freiräume zwischen dem Leitblech 25 bzw. der Verlängerung 27 und den Trennblechen 7 in den Auslasstrichter 4, von wo aus das dosierte Schüttgut in den zu befüllenden Sandsack 6 gelangt. Um einen neuen Sandsack 6 zu befüllen, muss der gefüllte Sandsack 6 entfernt und ein zu befüllender Sandsack 6 an der Halterung 5 angeordnet werden. Anschließend wird durch Betätigung des Verbindungsstabs 17 auch dieser Sandsack 6 gefüllt. Dieser zuvor beschriebene Arbeitsablauf lässt sich so lange wiederholen, bis sich kein Schüttgut mehr im Einfülltrichter 4 befindet.

Damit auch bei sehr feuchtern Schüttgut immer ein Füllgewicht von 20 kg im Sandsack 6 erreicht wird, kann die Vorrichtung zu Arbeitsbeginn kalibriert werden. Dazu wird eine grobe Voreinstellung vorgenommen, in dem, bei nassen Schüttgut, das Leitblech 25 nach unten geschwenkt und die Verlängerung 27 ausgezogen wird. Bei trockenem Schüttgut hingegen wird Schüttgut das Leitblech 25 nach oben geschwenkt und die Verlängerung 27 unter das Leitblech 25 geschoben. Danach wird der gefüllte Sandsack 6 gewogen. Entsprechend dem Ergebnis wird dann eine Feinjustierung durchgeführt, bei der, bei einem zu schweren Sandsack 6, das Leitblech 25 ein wenig nach unten geschwenkt und/ oder die Verlängerung 27 weiter herausgezogen wird. Ist der gefüllte Sandsack 6 zu leicht, dann wird das Leitblech 25 ein wenig nach oben geschwenkt und/oder die Verlängerung 27 weiter unter das Leitblech 25 geschoben.

### Liste der Bezugszeichen

- 1: Maschinengestell
- 2: Trommel
- 3: Einfülltrichter
- 4: Auslasstrichter
- 5: Halterung
- 6: Behälter, Sandsack
- 7: Trennblech
- 8: Füllsegment
- 9: Füllsegment
- 10: Füllsegment
- 11: Füllsegment
- 12: Welle
- 13: Lager
- 14: Arretierung
- 15: Segmentanschlag
- 16: Hebelarm
- 17: vordere Sperrklinke
- 18: hintere Sperrklinke
- 19: Verbindungsstab
- 20: Fußhebel
- 21: Trittfläche
- 22: Lager
- 23: Gelenk
- 24: Auflage
- 25: Leitblech
- 26: Befestigung
- 27: Verlängerung

## Patentansprüche

1. Verfahren zum Dosieren von Schüttgut, bei dem eine Menge des Schüttgutes dosiert wird, die dosierte Menge des Schüttgutes in einer Kreisbahn von einer oberen Position zu einer unteren Position befördert wird und dort in einen Behälter (6) abgegeben wird,
**dadurch gekennzeichnet, dass** die Beförderung der dosierten Menge des Schüttgutes auf der Kreisbahn von der Gewichtskraft der dosierten Menge und dem horizontalen Abstand der dosierten Menge vom Mittelpunkt der Kreisbahn angetrieben wird.

2. Verfahren nach Anspruch 1,
**dadurch gekennzeichnet, dass** die Beförderung der dosierten Menge des Schüttgutes auf der Kreisbahn für einen Zeitraum des Dosierens und des Abgebens der dosierten Menge des Schüttgutes in den Behälter (6) stufenweise erfolgt.

3. Verfahren nach Anspruch 2,
**dadurch gekennzeichnet, dass** die stufenweise Beförderung der dosierten Menge des Schüttgutes auf der Kreisbahn automatisch erfolgt.

4. Vorrichtung zum Dosieren von Schüttgut in einen Behälter (6), bestehend aus einem Maschinengestell (1) mit einer drehbar gelagerten Trommel (2), einem oberen Einfülltrichter (3) und einem unteren Auslasstrichter (4), wobei die Trommel (2) mantelflächig offen ist und mehrere durch Trennbleche (7) unterteilte Füllsegmente (8, 9, 10, 11) aufweist,
**dadurch gekennzeichnet, dass** die drehbare Trommel (2) eine Vorrichtung zur Positionierung der Füllsegmente (8, 9, 10, 11) besitzt und die Positionen der Füllsegmente (8, 9, 10, 11) so bestimmt sind, dass die beiden Trennbleche (7) jedes Füllsegmentes (8, 9, 10, 11) in einem unterschiedlichen Winkel zum Lot stehen.

5. Vorrichtung nach Anspruch 4,
**dadurch gekennzeichnet, dass** der Winkel zwischen dem Trennblech (7) und dem Lot in Drehrichtung größer und der Winkel zwischen dem Trennblech (7) und dem Lot entgegen der Drehrichtung kleiner gewählt ist.

6. Vorrichtung nach Anspruch 5,
**dadurch gekennzeichnet, dass** die Trommel (2) vier Füllsegmente (8, 9, 10, 11) aufweist, und dass der Winkel in Drehrichtung 90° und der Winkel entgegen der Drehrichtung 0° beträgt.

7. Vorrichtung nach Anspruch 4,
**dadurch gekennzeichnet, dass** die Füllsegmente (8, 9, 10, 11) jeweils mindestens ein Leitblech (25) zur Beeinflussung der Lagerung und der Füllmenge des Schüttgutes aufweisen, wobei das Leitblech (25) mit seinem äußeren Ende mit dem äußeren Umfang der Trommel 2 abschließt und einen Drehpunkt nahe dem äußeren Umfang der Trommel 2 besitzt.

8. Vorrichtung nach Anspruch 7,
**dadurch gekennzeichnet, dass** jedes Leitblech (25) schwenkbar zwischen einer nahezu parallelen Anordnung zum in Drehrichtung vorgelagertem Trennblech (7) und einer nahezu parallelen Anordnung zum entgegen der Drehrichtung nachgelagertem Trennbiech (7) einstellbar ist, wobei die Anordnung jedes Leitbleches (25) so gewählt ist, dass die Schüttgutablage im Füllsegment (8, 9, 10, 11) nach außen begrenzt bleibt.

9. Vorrichtung nach Anspruch 8,
**dadurch gekennzeichnet, dass** die Leitbleche (24) durch die Verlängerungen (26) in den inneren Bereich der Trommel (2) verlängerbar sind.

10. Vorrichtung nach Anspruch 9,
**dadurch gekennzeichnet, dass** die Anzahl der Leitbleche (25) mit den Verlängerungen (27) sowie die Gesamtbreite des Leitbleches (25) und der Verlängerung (27) die Menge an Schüttgut in den Füllsegmenten (8, 9, 10, 11) definiert.

11. Vorrichtung nach Anspruch 4,
**dadurch gekennzeichnet, dass** die Vorrichtung zur Positionierung der Füllsegmente (8, 9, 10, 11) eine automatische Arretierung (14) ist, die aus einem Hebelarm (16) mit zwei Sperrklinken (17, 18) besteht, wobei der Hebelarm (16) einerseits über ein Lager (22) drehbar gegenüber dem. Maschinengestell (1) gelagert und andererseits über ein Verbindungsstab (19) mit zwei außen liegenden Gelenken (23) mit einem Fußhebel (20) verbunden ist.

12. Vorrichtung nach Anspruch 4,
**dadurch gekennzeichnet, dass** der Abstand zwischen Einfülltrichter (3) einerseits und einer seitlichen Begrenzung der Trommel (2), den Füllsegmenten (8, 9, 10, 11) und dem Trennblech (7) andererseits so groß gewählt wird, dass bei einem minimalen Böschungswinkel des Schüttgutes dieses zwischen den Bauteilen nicht hindurchgelangen kann.
